# FASCICULE DE BREVET EUROPEEN

(11) **EP 0 918 149 B1**
(45) Date de publication et mention de la délivrance du brevet: **19.12.2001**
(21) Numéro de dépôt: 98402856.3
(22) Date de dépôt: 18.11.1998
(51) Int. Cl.: F02C 7/047, B64D 15/04

(54) **Dispositif de protection pour capot d'entrée d'air de moteur à réaction, pourvu d'un système de dégivrage**
Schutzeinrichtung für den mit einem Enteisungssystem versehenen Lufteinlauf eines Strahltriebwerks
Protection device for the air inlet of a jet engine which is provided with an anti-icing system

(30) Priorité: 21.11.1997 FR 9714610
(43) Date de publication de la demande: 26.05.1999
(73) Titulaire: AEROSPATIALE MATRA, 75016 Paris (FR)
(72) Inventeur: Porte, Alain, 31770 Colomiers (FR)
(74) Mandataire: Bonnetat, Christian

(56) Documents cités:
- EP-A- 0 178 144
- EP-A- 0 205 283
- EP-A- 0 430 801
- EP-A- 0 536 089

## Description

La présente invention concerne le dégivrage des capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud.

A cet effet, un tel capot d'entrée d'air comporte :
- un bord d'attaque creux délimitant une chambre périphérique interne, fermée par une première cloison interne (ou cadre) et pourvue d'au moins un orifice mettant en communication ladite chambre interne avec l'extérieur ; et
- une conduite, apte à être raccordée, à son extrémité arrière opposée audit bord d'attaque et traversant une seconde cloison interne, audit circuit de circulation d'air chaud sous pression et, à son extrémité avant vers le bord d'attaque, à un injecteur injectant ledit air chaud sous pression dans ladite chambre interne.

L'air chaud sous pression, prélevé sur le moteur, est à une température élevée, par exemple de l'ordre de 400°C, de sorte que ladite conduite rayonne de la chaleur et que les structures environnantes dudit capot d'entrée d'air, sensibles à la chaleur (par exemple les panneaux acoustiques en matériau composite), doivent être protégées contre la chaleur. De plus, pour des raisons de sécurité évidentes, il est également nécessaire de prévoir une protection desdites structures environnantes, dans le cas de fuites d'air chaud sous pression ou de rupture de ladite conduite.

Dans la technique actuelle, on connaît essentiellement trois méthodes pour protéger lesdites structures voisines de la conduite de transport de l'air chaud de dégivrage. Il s'agit :
- tout d'abord, d'une protection par projection sur lesdites structures sensibles à la température d'un revêtement de peinture ou de mousse thermiquement isolant. Une telle protection est bien entendu limitée aux seules surfaces revêtues. Aussi, on est amené à projeter le revêtement thermiquement isolant, soit sur la totalité des éléments internes du capot d'entrée d'air, ce qui en augmente la masse et risque de rendre les inspections et réparations difficiles, soit seulement sur la partie desdits éléments au voisinage direct de ladite conduite, ce qui a pour conséquence que les éléments non protégés vieillissent mal sous l'effet de la chaleur et doivent être fréquemment réparés. De plus, étant donné la durée de vie limitée de tels revêtements thermiquement isolants, la protection qu'ils accordent n'est que temporaire et il est nécessaire de pratiquer des inspections périodiques fréquentes, délicates à mener à cause de la mauvaise accessibilité à l'intérieur dudit capot d'entrée d'air. Enfin, par sécurité, il est nécessaire de prévoir dans ledit capot un dispositif de détection d'éclatement de la conduite, telle qu'une porte de surpression, ce dispositif devant être spécifiquement attaché au capot de dégivrage ;
- ou bien, d'une protection par doubles parois. Cependant, étant donné la complexité de réalisation de doubles parois autour de raccords de conduites, une telle protection est souvent limitée aux conduites elles-mêmes. Il en résulte donc une protection thermique soit très partielle, soit complexe, onéreuse et lourde. Cependant, même si les raccords sont réalisés en doubles parois, il se produit une radiation thermique vers les structures sensibles, du fait qu'il n'existe pas d'évacuation des calories. Enfin, là encore, la sécurité impose un dispositif de détection spécifique de l'éclatement de la conduite ;
- ou bien encore, comme décrit dans le document EP-A-0 205 283, d'une protection par une structure métallique enveloppante, servant également à l'évacuation de l'air de dégivrage en sortie de la chambre périphérique interne du bord d'attaque. Cependant, la température encore élevée (environ 200°C) de l'air de dégivrage à la sortie du bord d'attaque entraîne un rayonnement thermique excessif de la structure métallique enveloppante vers lesdites structures environnantes. Par ailleurs, un dispositif de détection d'éclatement de ladite conduite, qui serait pourtant indispensable à la sécurité, est très difficile, sinon impossible, à installer, à cause de la forme et de la conception d'une telle protection.

La présente invention a pour objet de remédier à ces inconvénients.

A A cette fin, selon l'invention, le capot d'entrée d'air pour moteur à réaction, notamment pour aéronef, ledit capot d'entrée d'air étant pourvu de moyens de dégivrage de son bord d'attaque et comportant à cet effet :
- un bord d'attaque creux délimitant une chambre périphérique interne, fermée par une première cloison interne et pourvue d'au moins un orifice mettant en communication ladite chambre interne avec l'extérieur ; et
- une conduite, apte à être raccordée, à son extrémité arrière opposée audit bord d'attaque et traversant une seconde cloison interne, à un circuit d'air chaud sous pression et, à son extrémité avant vers ledit bord d'attaque, à un injecteur injectant ledit air chaud sous pression dans ladite chambre interne,
est remarquable en ce qu'il comporte :
- une enveloppe interne coopérant avec lesdites première et seconde cloisons internes et avec la face interne de la paroi externe dudit capot pour délimiter un volume enfermant ladite conduite ;
- au moins un orifice d'introduction d'air dans ledit volume ; et
- au moins un orifice d'extraction d'air hors dudit volume.

Ainsi, grâce à la présente invention, ladite enveloppe interne, continue et intégrale, permet de protéger les structures environnantes contre les radiations thermiques et les fuites d'air chaud sous pression, ainsi que contre l'explosion de ladite conduite. La conduite, avec ses raccords et ses brides, est isolée du reste de l'intérieur du capot d'entrée d'air. Grâce aux orifices d'introduction et d'extraction d'air, on obtient une ventilation permanente interne de l'enveloppe, ce qui limite la radiation thermique de celle-ci. Les structures environnantes sensibles à la chaleur se trouvent ainsi protégées de toute détérioration ou vieillissement, liés à la température.

Toutes les pièces constituant ladite enveloppe interne, ayant une fonction spécifique et étant localisées et limitées au juste environnement devant être protégé, peuvent être métalliques ou en toute autre matière résistant au feu, sans que cela influence trop défavorablement la masse dudit capot d'entrée d'air. Ainsi, la présente invention permet d'apporter des solutions à tous les problèmes rencontrés dans les capots d'entrée d'air de moteur, en ce qui concerne :
- la résistance aux températures élevées ; et
- les facilités de réparation et d'inspection ; en effet, en prévoyant amovible le montage de ladite enveloppe dans ledit capot d'entrée d'air, on peut inspecter les pièces constituant la protection thermique, ainsi que les pièces environnantes (structure et systèmes).

Pour augmenter encore ces facilités de réparation et d'inspection, il est avantageux que, du côté de la paroi dudit capot, ladite enveloppe interne soit fixée sur une partie de ladite paroi formant un panneau démontable.

Par ailleurs, afin d'accepter les dilatations thermiques et les mouvements relatifs, il est préférable que, au moins à l'une de ses extrémités, ladite enveloppe interne s'appuie contre la cloison interne correspondante par l'intermédiaire d'un joint élastique.

L'un desdits orifices de ventilation peut être pratiqué dans ladite paroi externe dudit capot d'entrée d'air, au voisinage de ladite cloison interne.

Dans le cas où le moteur est du type à double flux et comporte un espace annulaire périphérique délimité entre ledit moteur et son capotage latéral, au niveau du ventilateur du moteur, il est avantageux qu'un autre desdits orifices de ventilation soit pratiqué dans ladite seconde cloison interne pour mettre en communication ledit volume et ledit espace annulaire périphérique. Ainsi, en cas de rupture de ladite conduite, l'air chaud sous pression peut être évacué vers ledit espace annulaire périphérique et la surpression qui en résulte est détectée par la porte de surpression, généralement prévue dans cet espace annulaire périphérique. Il n'est donc pas nécessaire de prévoir un détecteur de surpression spécifique au système de dégivrage du capot d'entrée d'air.

Bien entendu, lesdits orifices de ventilation sont calibrés pour assurer, en fonctionnement normal (c'est-à-dire en l'absence d'éclatement de ladite conduite), une ventilation appropriée de ladite enveloppe. Cette ventilation peut se faire de ladite première cloison interne vers la seconde, ou bien de ladite seconde cloison interne vers la première.

Les figures du dessin annexé feront bien comprendre comment l'invention peut être réalisée. Sur ces figures, des références identiques désignent des éléments semblables.

La figure 1 montre, en perspective éclatée, un moteur d'aéronef à réaction et ses différents capotages.

La figure 2 est une demi-coupe radiale agrandie d'un mode de réalisation du capot d'entrée d'air dudit moteur, illustrant les moyens de dégivrage dudit capot.

La figure 3 est une coupe transversale, partielle et agrandie, selon la ligne III-III de la figure 2.

La figure 4 est une demi-coupe radiale semblable à celle de la figure 2, illustrant l'éventualité d'une rupture de la conduite d'air chaud sous pression.

La figure 5 montre, en vue semblable à la figure 2, une variante de ventilation de l'enveloppe de protection conforme à la présente invention.

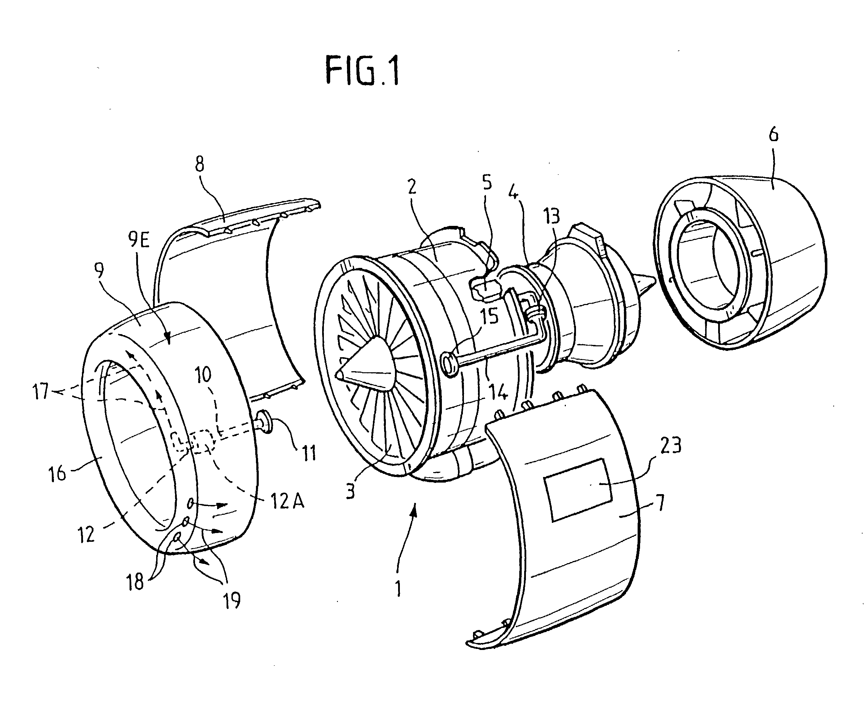

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

Comme cela est illustré schématiquement sur la figure 1, le capot d'entrée d'air 9 comporte une conduite interne 10, pourvue à son extrémité arrière dirigée vers le moteur 1 d'un élément de raccord 11 et à son extrémité avant logée dans le bord d'attaque creux 16 dudit capot d'entrée d'air d'un injecteur 12 pourvu d'un raccord 12A. Par ailleurs, sur un étage de compresseurs du moteur 1 est agencée une prise d'air chaud sous pression 13 qui est connectée à une conduite 14, pourvue, en regard de l'élément de raccord 11 de la conduite 10, d'un élément de raccord complémentaire 15.

Ainsi, lorsque les éléments de raccord 11 et 15 complémentaires sont reliés l'un à l'autre, de l'air chaud sous pression prélevé en 13 sur le moteur 1 est acheminé par les conduites 14 et 10 jusqu'à l'injecteur 12. Celui-ci peut donc souffler cet air chaud sous pression (flèches pointillées 17) à l'intérieur du bord d'attaque 16, pour le dégivrer. Des orifices 18 sont prévus pour l'évacuation à l'air libre (flèches 19) de l'air chaud ayant circulé à l'intérieur du bord d'attaque 16.

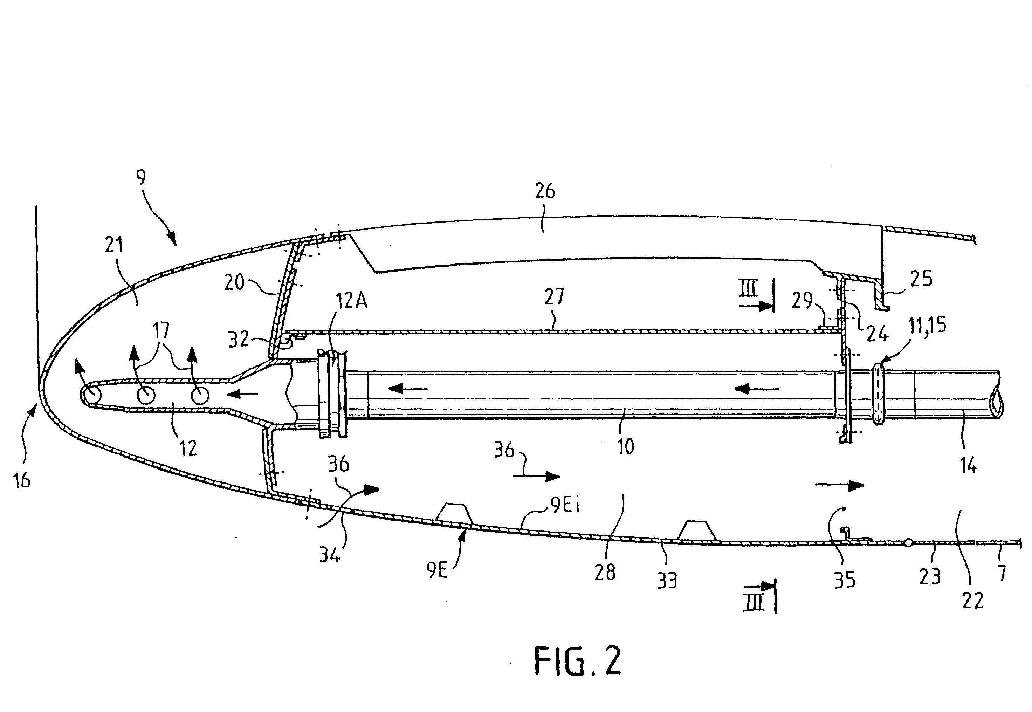

Comme le montre en détail et à plus grande échelle la demi-coupe radiale de la figure 2, le bord d'attaque creux 16 est fermé du côté arrière par une cloison interne 20, de sorte qu'une chambre périphérique annulaire 21 est formée à l'intérieur dudit bord d'attaque 16. L'injecteur 12 traverse ladite cloison interne 20 de façon étanche et y est fixé. Il peut donc injecter l'air chaud sous pression dans la chambre 21. Les orifices 18 permettent de mettre en communication ladite chambre 21 avec l'extérieur.

Lorsque les capots latéraux 7 et 8 sont assemblés au générateur central 2, ils délimitent avec celui-ci, au niveau du ventilateur 3, un espace annulaire périphérique 22 (voir la figure 2) dans lequel se trouve la conduite d'air chaud sous pression 14, ainsi que d'autres conduites de ce type (non représentées). Aussi, pour des raisons de sécurité, il est prévu dans ces capots latéraux 7 et 8 une porte de sécurité 23, à ouverture automatique en cas de surpression dans ledit espace annulaire périphérique 22, par exemple à la suite de l'éclatement de la conduite 14.

Par ailleurs, l'extrémité arrière de la conduite 10 --opposée à l'injecteur 12-- traverse une autre cloison 24, fermant l'extrémité arrière du capot 9, au voisinage du cadre 25 de montage dudit capot sur le moteur 1. Cette extrémité arrière de la conduite 10 est par ailleurs fixée à ladite cloison 24. Ainsi, la conduite 10 et le raccord 12A sont compris entre les deux cloisons 20 et 24, ainsi que d'autres structures, telles que par exemple un panneau acoustique 26. Un tel panneau acoustique 26 est réalisé en matière composite, par exemple du type nid d'abeilles, et il est sensible à la chaleur. Il peut donc être détruit ou endommagé par la chaleur rayonnée par la conduite 10 ou par les éventuelles fuites d'air chaud sous pression véhiculé par celle-ci, ou bien encore, en cas d'éclatement de ladite conduite 10, par l'air chaud sous pression s'échappant de cette dernière.

Aussi, selon l'invention, pour remédier à ces inconvénients, on prévoit une enveloppe interne 27 coopérant avec les cloisons 20 et 24 et avec la face interne 9Ei de la paroi externe 9E du capot pour délimiter un volume 28 enfermant la conduite 10 et le raccord 12A et les isolant des structures 26 sensibles à la chaleur.

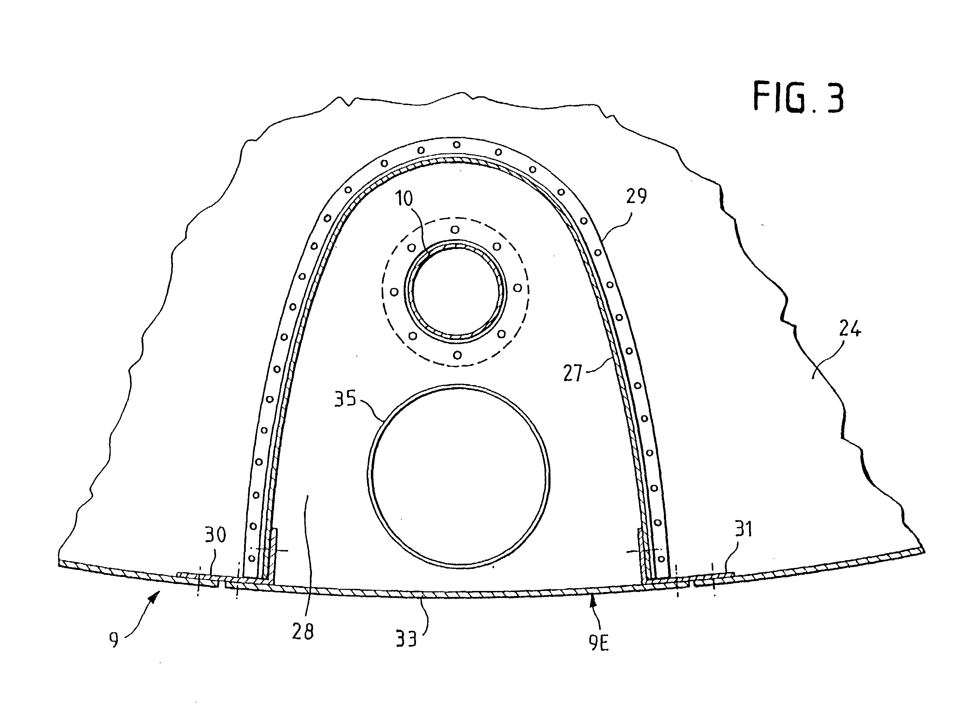

Dans l'exemple représenté sur les figures 2 à 5, l'enveloppe interne 27 présente la forme d'une auge renversée et elle est fixée de façon démontable aux cloisons 20 et 24 et à la paroi externe 9E du capot 9. Dans cet exemple, l'enveloppe interne 27 est fixée à la cloison 24 et à la paroi externe 9E du capot 9 par des cornières 29, 30 et 31, respectivement. De plus, pour pouvoir s'adapter aux dilatations thermiques et aux vibrations, la jonction entre le bord avant de l'enveloppe 27 et la cloison 20 est réalisée par l'intermédiaire d'un joint élastique d'appui 32.

Pour augmenter la démontabilité de l'enveloppe interne 27, il est avantageux que la partie de la paroi externe 9E à laquelle elle est fixée soit constituée par un panneau 33, lui-même démontable.

Par ailleurs, le volume 28 enfermant la conduite 10 et le raccord 12A est en communication :
- avec l'extérieur par un orifice 34, prévu au voisinage de la cloison 20, dans la paroi externe 9E (panneau 33), et
- avec l'espace annulaire périphérique 22 par un orifice 35, pratiqué dans la cloison 24.

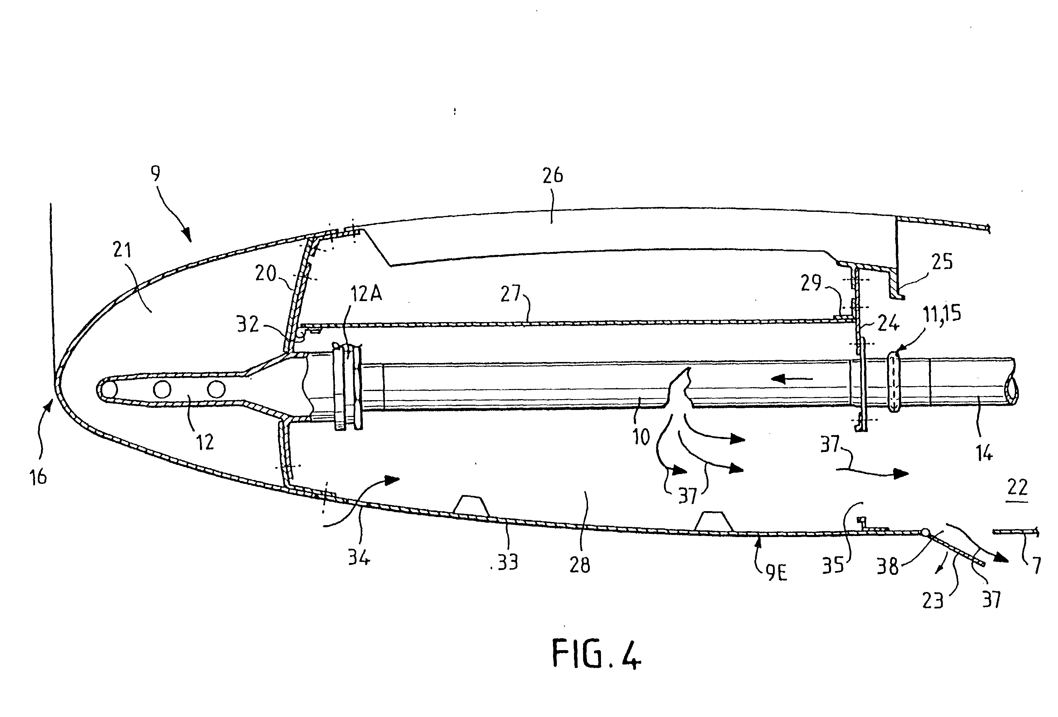

Ainsi, en fonctionnement normal (voir la figure 2), de l'air de ventilation, symbolisé par les flèches 36, peut pénétrer dans le volume 28 par l'orifice 34 et emporter les calories rayonnées par la conduite 10 vers l'espace annulaire périphérique 22, à travers l'orifice 35. De plus, en cas de rupture de la conduite 10 (voir la figure 4 et les flèches 37 symbolisant cette rupture), l'air chaud sous pression est immédiatement adressé audit espace annulaire périphérique 22 par l'orifice 35. Bien entendu, celui-ci est calibré pour que la surpression résultant de la rupture de la conduite 10 ne soit pas dommageable à l'enveloppe interne 27. De plus, cette surpression entraîne l'ouverture de la porte de pression 23 et l'air chaud peut s'échapper vers l'extérieur à travers l'ouverture 38 de celle-ci dans le capot 7. Après une telle ouverture, la porte de pression 23 reste ouverte, ce qui indique à un opérateur inspectant l'extérieur du moteur 1, qu'une surpression s'est produite.

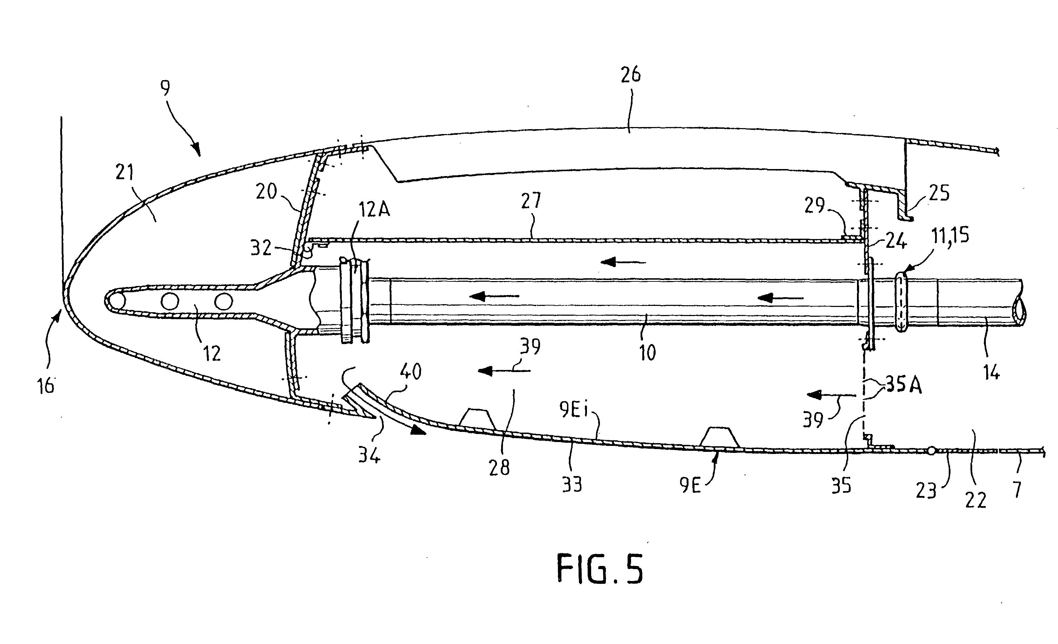

Sur la figure 5, on a illustré une ventilation de la conduite 10 en fonctionnement normal, de sens inverse à celle illustrée par la figure 2. On voit que cette ventilation, illustrée par les flèches 39, va de l'espace annulaire périphérique 22 vers l'extérieur, en passant à travers les orifices 35 et 34. Ce dernier orifice 34 peut être pourvu d'une écope 40 faisant saillie, vers l'intérieur ou l'extérieur du volume 28, pour améliorer la ventilation de la conduite 10. En cas de rupture de la conduite 10, le fonctionnement du dispositif de la figure 5 est identique à celui décrit en regard de la figure 4.

Bien entendu, de façon plus générale, l'orifice 34 peut être pourvu d'un système de grille ou de fentes, permettant le passage de l'air, mais interdisant celui d'une flamme, pour satisfaire à la réglementation internationale sur ce point. De même, l'orifice 35 peut être constitué d'une multitude de petits orifices 35A permettant à l'air de les traverser, mais se comportant comme une grille coupe-flamme évitant à un feu venant de l'espace annulaire périphérique 22 de traverser la cloison interne 24 (voir la figure 5). Pour des raisons analogues, l'enveloppe 27 et ses accessoires 29, 30, 31 et 32 sont réalisés en matériaux résistant au feu, notamment en matériaux métalliques.

## Revendications

1. Capot d'entrée d'air (9) pour moteur à réaction (1), notamment pour aéronef, ledit capot d'entrée d'air (9) étant pourvu de moyens de dégivrage de son bord d'attaque et comportant à cet effet :
- un bord d'attaque (16) creux délimitant une chambre périphérique interne (21), fermée par une première cloison interne (20) et pourvue d'au moins un orifice (18) mettant en communication ladite chambre interne (21) avec l'extérieur ; et
- une conduite (10), apte à être raccordée, à son extrémité arrière opposée audit bord d'attaque (16) et traversant une seconde cloison interne (24), à un circuit d'air chaud sous pression (14) et, à son extrémité avant vers ledit bord d'attaque (16), à un injecteur (12) injectant ledit air chaud dans ladite chambre interne (21),
**caractérisé en ce qu'**il comporte :
- une enveloppe interne (27) coopérant avec lesdites première et seconde cloisons internes (20, 24) et avec la face interne (9Ei) de la paroi externe (9E) dudit capot (9) pour délimiter un volume (28) enfermant ladite conduite (10) ;
- au moins un orifice (34 ou 35) d'introduction d'air dans ledit volume (28) ; et
- au moins un orifice (35 ou 34) d'extraction d'air hors dudit volume (28).

2. Capot d'entrée d'air selon la revendication 1,
**caractérisé en ce que** ladite enveloppe interne (27) est montée de façon amovible.

3. Capot d'entrée d'air selon l'une des revendications 1 ou 2,
**caractérisé en ce que**, du côté de la paroi (9E) dudit capot (9), ladite enveloppe interne (27) est fixée sur une partie de ladite paroi formant un panneau démontable (33).

4. Capot d'entrée d'air selon l'une des revendications 1 à 3,
**caractérisé en ce que**, à au moins l'une de ses extrémités, ladite enveloppe interne (27) s'appuie contre la cloison interne correspondante (20) par l'intermédiaire d'un joint élastique (32).

5. Capot d'entrée d'air selon l'une des revendications 1 à 4,
**caractérisé en ce qu'**un premier (34) desdits orifices est pratiqué dans ladite paroi externe (9E) dudit capot (9), au voisinage de ladite première cloison interne (20).

6. Capot d'entrée d'air selon l'une des revendications 1 à 5, pour un moteur à double flux (1) comportant un espace annulaire périphérique (22) délimité entre ledit moteur et son capotage latéral (7, 8) au niveau du ventilateur (3) du moteur, ledit capotage latéral (7, 8) étant pourvu d'une porte de sécurité (23), à ouverture automatique, en cas de surpression dans ledit espace annulaire périphérique (22),
**caractérisé en ce qu'**un second (35) desdits orifices est pratiqué dans ladite seconde cloison interne (24) pour mettre en communication ledit volume (28) et ledit espace annulaire périphérique (22).

7. Capot d'entrée d'air selon les revendications 5 et 6,
**caractérisé en ce que**, dans ledit volume (28), de l'air de ventilation (36) circule du premier orifice (34) vers le second (35).

8. Capot d'entrée d'air selon les revendications 5 et 6,
**caractérisé en ce que**, dans ledit volume (28), de l'air de ventilation (39) circule du second orifice (35) vers le premier (34).

9. Capot d'entrée d'air selon la revendication 8,
**caractérisé en ce que** ledit premier orifice (34) est prolongé par une écope saillante (40).

10. Capot d'entrée d'air selon l'une des revendications 6 à 9,
**caractérisé en ce que** ledit second orifice (35) est réalisé par une multitude de petits orifices (35A) permettant à l'air de les traverser, mais se comportant comme une grille coupe-flamme évitant à un feu venant de l'espace annulaire périphérique (22) de traverser ladite seconde cloison interne (24).

## Patentansprüche

1. Lufteinlauf (9) für Strahltriebwerke (1) insbesondere von Flugzeugen, wobei der genannte Lufteinlauf (9) mit Mitteln zur Enteisung seiner Eintrittskante ausgestattet ist und zu diesem Zweck folgendes umfasst:
- eine hohle Eintrittskante (16), die eine Umfangsinnenkammer (21) begrenzt, die durch eine erste Innentrennwand (20) verschlossen wird und mit mindestens einer Öffnung (18) versehen ist, die die genannte Innenkammer (21) mit der Außenumgebung verbindet, und
- eine Leitung (10), die an ihrem hinteren, entgegengesetzt zur genannten Eintrittskante (16) liegenden und durch eine zweite Innentrennwand (24) hindurchführenden Ende mit einem Heißdruckluftkreis (14) und an ihrem vorderen Ende zur genannten Eintrittskante (16) hin mit einer Einspritzdüse (12) verbunden werden kann, die die genannte heiße Druckluft in die genannte Innenkammer (21) einspritzt, **dadurch gekennzeichnet, dass** er folgendes umfasst:
- einen Innenmantel (27), der mit der genannten ersten und der genannten zweiten Innentrennwand (20, 24) und der Innenfläche (9Ei) der Außenwand (9E) des genannten Einlaufs (9) zusammenwirkt, um einen Raum (28) zu begrenzen, der die genannte Leitung (10) umschließt;
- mindestens eine Öffnung (34 oder 35) zum Einleiten von Luft in den genannten Raum (28) und
- mindestens eine Öffnung (35 oder 34) zum Abführen von Luft aus dem genannten Raum (28).

2. Lufteinlauf gemäss Anspruch 1,
**dadurch gekennzeichnet, dass** der genannte Innenmantel (27) abnehmbar montiert ist.

3. Lufteinlauf gemäss einem der Ansprüche 1 oder 2,
**dadurch gekennzeichnet, dass** der genannte Innenmantel (27) von der Seite der Wand (9E) des genannten Einlaufs (9) an einem Teil der genannten Wand befestigt wird, der eine demontierbare Platte (33) bildet.

4. Lufteinlauf gemäss einem der Ansprüche 1 bis 3,
**dadurch gekennzeichnet, dass** der genannte Innenmantel (27) über eine elastische Verbindung (32) mindestens an einem seiner Enden an der entsprechenden Innentrennwand (20) anliegt.

5. Lufteinlauf gemäss einem der Ansprüche 1 bis 4,
**dadurch gekennzeichnet, dass** eine erste (34) der genannten Öffnungen in der genannten Außenwand(9E) des genannten Einlaufs (9) in Nähe der genannten ersten Innentrennwand (20) angebracht ist.

6. Lufteinlauf gemäss einem der Ansprüche 1 bis 5, für ein Zweistromtriebwerk (1), das einen Umfangsringraum (22) umfasst, der zwischen dem genannten Triebwerk (1) und seiner Seitenverkleidung (7, 8) am Lüfter (3) des Triebwerks abgegrenzt ist, wobei die genannte Seitenverkleidung (7, 8) mit einer Sicherheitsklappe (23) versehen ist, die sich im Falle von Überdruck im genannten Umfangsringraum (22) automatisch öffnet,
**dadurch gekennzeichnet, dass** eine zweite (35) der genannten Öffnungen in der genannten zweiten Innentrennwand (24) angebracht ist, um den genannten Raum (28) und den genannten Umfangsringraum (22) miteinander zu verbinden.

7. Lufteinlauf gemäss den Ansprüchen 5 und 6,
**dadurch gekennzeichnet, dass** im genannten Raum (28) Lüftungsluft (36) von der ersten Öffnung (34) zur zweiten (35) zirkuliert.

8. Lufteinlauf gemäss den Ansprüchen 5 und 6,
**dadurch gekennzeichnet, dass** im genannten Raum (28) Lüftungsluft (36) von der zweiten Öffnung (34) zur ersten (35) zirkuliert.

9. Lufteinlauf gemäss Anspruch 8,
**dadurch gekennzeichnet, dass** die genannte erste Öffnung (34) durch ein vorstehendes schaufelförmiges Teil (40) verlängert wird.

10. Lufteinlauf gemäss einem der Ansprüche 6 bis 9,
**dadurch gekennzeichnet, dass** die genannte zweite Öffnung (35) als Vielzahl kleiner Öffnungen (35A) ausgeführt ist, die es der Luft ermöglichen, durch sie hindurchzuströmen, sich jedoch wie ein Flammensperrgitter verhalten, die verhindem, dass ein vom Umfangsringraum (22) kommendes Feuer durch die genannte Innentrennwand (24) hindurchgeht.

## Claims

1. An air inlet cowl (9) for a jet engine (1) especially for an aircraft, said air inlet cowl (9) being equipped with means for deicing its leading edge and comprising, for this purpose:
- a hollow leading edge (16) delimiting an internal peripheral chamber (21) closed by a first internal partition (20) and equipped with at least one orifice (18) placing said internal chamber (21) in communication with the outside; and
- a pipe (10) which can be connected, at its rear end away from said leading edge (16) and passing through a second internal partition (24), to a pressurized hot air circuit (14) and, at its front end toward said leading edge (16), to an injector (12) injecting said hot air into said internal chamber (21),
**characterized in that** it comprises:
- an internal casing (27) cooperating with said first and second internal partitions (20, 24) and with the internal face (9Ei) of the external wall (9E) of said cowl (9) to delimit a volume (28) enclosing said pipe (10);
- at least one orifice (34 or 35) for letting air into said volume (28); and
- at least one orifice (35 or 34) for extracting air from said volume (28).

2. The air inlet cowl as claimed in claim 1,
**characterized in that** said internal casing (27) is mounted removably.

3. The air inlet cowl as claimed in either of claims 1 and 2,
**characterized in that**, at the same end as the wall (9E) of said cowl (9), said internal casing (27) is fixed to a part of said wall that forms a removable panel (33).

4. The air inlet cowl as claimed in one of claims 1 to 3,
**characterized in that**, at least at one of its ends, said internal casing (27) rests against the corresponding internal partition (20) via an elastic seal (32).

5. The air inlet cowl as claimed in one of claims 1 or 4,
**characterized in that** a first (34) of said orifices is made in said external wall (9E) of said cowl (9) near to said first internal partition (20).

6. The air inlet cowl as claimed in one of claims 1 to 5, for a bypass engine (1) comprising a peripheral annular space (22) delimited between said engine and its lateral cowling (7, 8) in the region of the engine fan (3), said lateral cowling (7, 8) being equipped with a safety door (23) which opens automatically in the event of a raised pressure in said peripheral annular space (22),
**characterized in that** a second (35) of said orifices is made in said second internal partition (24) so as to place said volume (28) and said peripheral annular space (22) in communication.

7. The air inlet cowl as claimed in claims 5 and 6,
**characterized in that**, in said volume (28), ventilation air (36) flows from the first orifice (34) toward the second (35).

8. The air inlet cowl as claimed in claims 5 and 6,
**characterized in that**, in said volume (28), ventilation air (39) flows from the second orifice (35) toward the first (34).

9. The air inlet cowl as claimed in claim 8,
**characterized in that** said first orifice (34) is extended by a projecting scoop (40).

10. The air inlet cowl as claimed in one of claims 6 to 9,
**characterized in that** said second orifice (35) is made up of a great many small orifices (35A) allowing air to pass through them but behaving like a flame-arrester grid preventing a fire originating in the peripheral annular space (22) from passing through said second internal partition (24).
